# FASCICULE DE BREVET EUROPEEN

(11) **EP 1 237 346 B1**
(45) Date de publication et mention de la délivrance du brevet: **23.11.2005**
(21) Numéro de dépôt: 02290250.6
(22) Date de dépôt: 04.02.2002
(51) Int. Cl.: H04M 1/725, H04M 19/04

(54) **Procédé et dispositif pour la signalisation d'un appel ou d'un message à son destinataire**
Verfahren und Gerät zur Signalisierung eines Anrufes oder einer Nachricht an seinen Empfänger
Method and device for signalling a call or a message to its recipient

(30) Priorité: 22.02.2001 FR 0102389
(43) Date de publication de la demande: 04.09.2002
(73) Titulaire: ALCATEL, 75008 Paris (FR)
(72) Inventeur: Daurensan, Véronique, 92160 Antony (FR)
(74) Mandataire: Chaffraix, Sylvain

(56) Documents cités:
- WO-A-98/05151
- GB-A- 2 324 933
- US-A- 5 870 684

## Description

La présente invention concerne le domaine des communications, en particulier des télécommunications, notamment les services en relation avec les MMI (pour Man Machine Interface : interface homme/machine) associés aux terminaux de communication, et a pour objet un procédé et un dispositif pour la signalisation d'un appel ou d'un message à son destinataire.

Il est déjà connu, notamment en relation avec les terminaux mobiles de radiocommunication, en particulier les téléphones portables ou cellulaires, de programmer le mode de signalisation d'un appel entrant à son destinataire en fonction de la situation de ce dernier.

Ainsi, un téléphone mobile peut être programmé pour avertir le destinataire par l'intermédiaire d'un vibrateur lorsque ce dernier a sollicité un mode de signalisation discret (participation du destinataire à une réunion, à un concert ou analogue) ou par l'intermédiaire d'un son unique, d'un son répété ou d'une mélodie musicale lorsque ledit destinataire a sollicité un mode de signalisation générant un avertissement plus facilement perceptible (destinataire présent dans un lieu ne nécessitant pas une discrétion particulière).

Néanmoins, une telle programmation du mode de signalisation d'un appel ou d'un message sur la base d'un seul critère présente une souplesse d'application très limitée et ne permet pas de réaliser un filtrage flexible des appels et/ou des messages entrants, qui serait susceptible d'autoriser une adaptation du degré d'attraction de l'attention du destinataire en fonction de l'importance à accorder auxdits appels et messages entrants, au moins partiellement en fonction d'une programmation préalable de l'utilisateur destinataire.

Le document WO 9 805 151 A décrit un procédé et dispositif pour l'identification d'appels téléphoniques.

Le document GB-A-2 324 933 décrit un terminal de télécommunication.

La présente invention a notamment pour but de pallier cette limitation.

A cet effet, elle a pour objet un procédé de signalisation d'un appel ou d'un message électronique entrant provenant d'un émetteur donné, à l'utilisateur d'un terminal récepteur, destinataire dudit appel ou message, caractérisé en ce qu'il consiste à réaliser les étapes suivantes :
- identification de l'émetteur,
- prise en compte d'au moins un paramètre évolutif ou prédéterminé relatif audit émetteur ;
- sélection dynamique d'au moins un mode et/ou d'au moins un moyen de signalisation disponible au niveau dudit terminal récepteur en fonction de l'état dudit au moins un paramètre lié à l'émetteur.

Afin de pouvoir augmenter davantage encore la faculté d'adaptation et la finesse de la sélectivité du procédé selon l'invention, la sélection dynamique peut également tenir compte de l'état d'au moins un autre paramètre programmé par l'utilisateur et/ou de l'état d'au moins un paramètre lié à l'environnement ou à l'état dudit terminal récepteur.

Conformément à une première caractéristique de l'invention, un paramètre évolutif, relatif à l'émetteur, pris en compte à chaque nouvel appel ou message correspond au nombre d'appels ou de messages antérieurs de la part du même émetteur restés sans réponse, immédiate ou différée, de la part de l'utilisateur destinataire, ledit paramètre étant modifié, par exemple incrémenté, en cas d'absence de réponse audit nouvel appel ou message, le cas échéant sous réserve d'une autorisation correspondante de l'utilisateur.

Il peut également être prévu qu'un autre paramètre évolutif, relatif à l'émetteur, pris en compte correspond ; dans le cas d'un message électronique, au degré d'importance attaché audit message.

Selon une autre caractéristique de l'invention, le paramètre prédéterminé, relatif à l'émetteur, pris en compte correspond à l'identité dudit émetteur.

De manière avantageuse, le ou les paramètres programmés par l'utilisateur du terminal récepteur est (sont) choisi(s) dans le groupe formé par un degré de priorité ou d'importance spécifique attaché à différents émetteurs prédéfinis, la situation ou l'état courant(e) de l'utilisateur, et les préférences de l'utilisateur en termes de mode(s) et/ou de moyen(s) de signalisation et d'avertissement disponible(s).

Des degrés de priorité différents pourront, par exemple, être définis en autorisant seulement pour certains émetteurs seulement une modification du degré d'importance et du niveau d'avertissement, notamment une augmentation de ces derniers, de manière continue ou par degrés discrets, en fonction de l'augmentation du nombre d'appels ou de messages de ces émetteurs restés sans réponse de la part de l'utilisateur destinataire.

D'autres émetteurs, connus de l'utilisateur pourront se voir affectés un degré ou niveau d'avertissement, fixe, bas ou élevé en fonction de l'importance qu'accorde ledit utilisateur à chacun desdits émetteurs.

Pour d'éventuels autres émetteurs encore, considérés comme non prioritaires, seule sera pris en compte l'état d'absence de réponse, et non pas le nombre d'appels ou de messages sans réponse. Il en découle que ces émetteurs se verront attribuer uniquement deux états : en attente d'une réponse (avec définition d'un moyen et d'un mode de signalisation) ou absence d'attente de réponse.

En outre, le ou les paramètre(s) lié(s) à l'environnement ou à l'état dudit terminal récepteur peuvent être choisis dans le groupe formé par le niveau de bruit environnant, le degré de luminosité environnante, le degré d'autonomie restant pour le terminal récepteur et la disponibilité fonctionnelle des différents moyens de signalisation possibles, la valeur de ce(s) dernier(s) paramètre(s) étant susceptible de modifier le mode de mise en oeuvre du ou des moyen(s) de signalisation sélectionné(s).

Conformément à un mode de réalisation préféré de l'invention, le procédé de signalisation consiste, à l'occasion de chaque nouvelle réception d'un appel ou message entrant, à déterminer au moins un mode et/ou au moins un moyen de signalisation ou une combinaison de plusieurs modes et/ou moyens de signalisation, ainsi qu'éventuellement les degrés d'intensités respectifs de leur mise en oeuvre, par sélection sur la base d'une ou de plusieurs échelles de gradation, par exemple en termes d'efficacité d'avertissement, desdits modes et/ou moyens, associées chacune à une situation et/ou à un état courant(e) de l'utilisateur programmé(e) par ce dernier, et en fonction d'une valeur d'avertissement calculé à partir des valeurs des paramètres évolutif(s) et/ou non évolutif(s) attaché à l'émetteur appelant ou expéditeur.

En variante, il peut être prévu que ledit procédé consiste à l'occasion de chaque nouvel appel ou message entrant, à sélectionner un mode et/ou un moyen de signalisation après, d'une part, analyse des différents types de paramètres impliqués, d'autre part, prise en compte de leur importance relative prédéfinie par l'utilisateur et, enfin, vérification de l'existence de configurations de sélection multiparamétriques préprogrammées par l'utilisateur et, s'appliquant audit appel ou message entrant.

Ainsi qu'il ressort de ce qui précède, la présente invention fournit à l'utilisateur la possibilité d'être averti d'un appel téléphonique ou de la réception d'un message ou courrier électronique (en anglais "e-mail") de différentes manières.

Le moyen utilisé pour signaler l'appel ou la réception du message, ainsi que son mode de mise en oeuvre, pourront ainsi différer en fonction, d'une part, de paramètres d'entrée, liés à l'émetteur, comme par exemple l'identité de l'émetteur, le nombre d'appels infructueux dudit émetteur ou de messages dudit émetteur restés sans réponse de la part de l'utilisateur destinataire, d'autre part, de paramètres programmés par l'utilisateur, notamment la situation de ce dernier au moment de l'appel ou de la réception du message (en réunion, à la maison, au travail, ne pas déranger, en déplacement, ...), et, enfin, d'éventuels paramètres environnementaux ou circonstanciels.
La présente invention a également pour objet un dispositif pour la signalisation d'un appel ou d'un message électronique entrant provenant d'un appelant au moyen d'un terminal émetteur donné, à l'utilisateur d'un terminal récepteur, destinataire dudit appel ou message, caractérisé en ce qu'il comprend notamment, d'une part, un moyen d'identification du numéro ou de l'adresse de l'émetteur et, d'autre part, un module de sélection dynamique d'au moins un mode et/ou moyen de signalisation disponible au niveau du terminal récepteur en fonction de l'état d'au moins un paramètre, évolutif ou prédéterminé, relatif à l'émetteur et pris en compte par ledit module, le cas échéant, en relation avec l'état d'au moins un paramètre programmé par l'utilisateur et/ou l'état d'au moins un paramètre lié(s) à l'environnement ou à l'état dudit terminal récepteur.

Selon une caractéristique de l'invention, ledit dispositif peut comprendre, en outre, un fichier historique stockant automatiquement, pour chaque appel de message, le numéro ou l'adresse de l'émetteur, ainsi que, soit le nombre d'appels ou de messages successifs émis par chacun desdits émetteurs et restés sans réponse de la part de l'utilisateur du terminal récepteur, soit une simple indication d'attente de réponse de la part desdits émetteurs, ledit fichier historique étant mis à jour automatiquement à chaque nouvel appel ou message, par incrémentation de la variable indiquant le nombre d'appels ou de messages antérieurs de l'émetteur considéré restés sans réponse, par activation d'un indicateur d'attente de réponse de la part de l'émetteur considéré, ou encore par création d'un nouvel emplacement dans ledit fichier historique pour le stockage du numéro ou de l'adresse de l'émetteur et de la variable ou de l'indicateur correspondant.

A chaque nouvel appel ou à chaque nouvelle réception d'un message électronique, le module de sélection dynamique est apte, après prise en compte du numéro ou de l'adresse de l'émetteur, à lire la valeur de la variable ou l'état de l'indicateur affecté(e) audit émetteur dans ledit fichier historique, ces informations constituant un premier paramètre évolutif relatif à ce dernier.

Conformément à une autre caractéristique de l'invention, ledit dispositif comprend également un fichier d'affectation de degrés de priorité ou d'importance à des émetteurs donnés, un fichier d'indication et de configuration du ou des moyens de signalisation en fonction des valeurs et/ou état(s) des paramètres pris en compte par le module de sélection dynamique, un fichier ou une variable programmable indiquant la situation ou l'état courant(e) de l'utilisateur et un fichier contenant des valeurs de paramètres liés à l'environnement ou à l'état du terminal récepteur, ces fichiers et/ou cette variable étant, ensemble avec le fichier historique, consulté(e)(s) et leurs contenus exploités par le module de sélection dynamique en vue de la commande contrôlée du ou des moyens de signalisation pour générer un signal ou un message d'avertissement adapté pour l'utilisateur.

La présente invention permet par conséquent de fournir une interface de communication multimédia homme/machine, configurable et à fonctionnement dynamique.

Elle trouve plus particulièrement une application comme interface entre un téléphone portable et son propriétaire ou utilisateur, autorisant une sélection multiparamétrique d'un moyen et d'un mode de signalisation ou d'avertissement d'un appel ou d'un message en tenant compte de faits antérieurs (fichier historique), de la situation actuelle de l'utilisateur, de choix ou de priorités préprogrammés par l'utilisateur (hiérarchie de possibles émetteurs identifiés, priorités de certains émetteurs en fonction de la situation de l'utilisateur, ...).

Une évaluation des différents paramètres précités permettra de définir un degré d'importance pour l'appel en cours ou le message venant d'arriver et, par corrélation, un niveau d'avertissement dont l'interprétation par l'intermédiaire de tables de correspondance (fichiers d'indication et de confiruation des moyens de signalisation), une table préprogrammée étant affectée à chaque situation possible pour l'utilisateur, permettra de déterminer le moyen et le mode de signalisation.

Enfin, le mode de mise en oeuvre du moyen de signalisation sélectionné pourra être modifié en fonction des caractéristiques courantes de l'environnement du terminal récepteur (par exemple mesurées au moyen de capteurs adaptés ou déduites de données entrées par l'utilisateur), stockées dans un fichier ou des champs prédéfinis.

En fonction du type de terminal récepteur, les moyens de signalisation disponibles pourront être plus ou moins nombreux et de natures plus ou moins variées.

Lorsque le terminal récepteur est un terminal mobile du type téléphone portable, ces moyens sont généralement de trois types :
- vibrateur (vibrations variables en intensité, dans leur séquencement et dans leur durée) ;
- générateur audio (bip, son unique, son prolongé ou mélodie musicale, message préenregistré ou synthétisé ; avec des niveaux sonores ajustables) ;
- afficheur ou écran graphique [affichage du numéro, de l'adresse ou de l'identité de l'émetteur en continu ou de manière clignotante, avec une présentation graphique variable (couleur, position sur l'écran, taille de l'affichage, ...) ; affichage de la photographie ou d'un signe de reconnaissance de l'appelant].

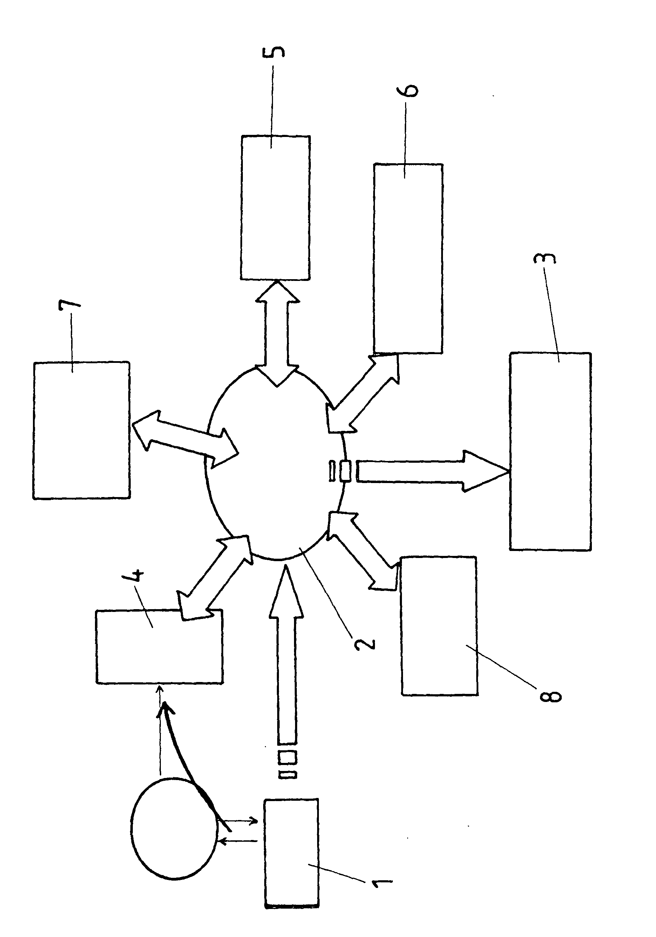

L'invention sera mieux comprise grâce à la description ci-après, qui se rapporte à un mode de réalisation préféré, donné à titre d'exemple non limitatif, et expliqué avec référence au dessin schématique annexé, dans lequel la figure unique représente de manière synoptique une possible réalisation d'un dispositif de signalisation selon l'invention, mettant en oeuvre le procédé décrit précédemment.

A l'aide de la figure annexée, on procède ci-après à la description détaillée d'un exemple de mise en oeuvre du procédé selon l'invention dans le cas d'un téléphone mobile.

Lorsque ce dernier reçoit un nouvel appel ou un nouveau message ou courrier électronique, l'identité de l'émetteur (personne appelante ou émetteur du courrier) est tout d'abord déterminée par un moyen 1 ou par une opération adaptée, du module de sélection dynamique 2.

Il est ensuite procédé à une modification du fichier historique 4 par incrémentation d'une variable N_call affectée audit émetteur et dont la valeur correspond au nombre d'appels et/ou de messages de la part dudit émetteur restés sans réponse de la part de l'utilisateur/destinataire.

Une structure possible d'un tel fichier historique est indiquée sous forme de tableau ci-après.

| Données d'entrée | Nombre de messages ou d'appels sans réponse (N_call) |
|---|---|
| 01.40.96.95.xx | 10 |
| Toto@xxx.fr | 2 |
| Etc. | Etc. |

La variable N_call est réinitialisée à 0 lorsque l'utilisateur prend l'appel ou répond à l'émetteur par un appel en retour différé ou en lui adressant un message en retour.

Le fichier historique 4 peut être avantageusement consulté par l'utilisateur. Ainsi, ce dernier a la possibilité de savoir quelle personne a essayé de le joindre pendant qu'il était, par exemple, dans une situation correspondant à un niveau d'avertissement faible et qu'il n'a pas pu prendre connaissance de l'appel ou du message reçu pendant cette période (soit parce que son attention n'a pas été suffisamment attirée, soit parce qu'il a décidé volontairement de ne pas y donner suite).

Lorsque le numéro ou l'adresse électronique de l'émetteur a été transmis(e) au module de sélection 2, ce dernier commence une phase de traitement en consultant tout d'abord le fichier historique 4 (pour connaître le nombre d'appels ou de messages restés sans réponse pour cet émetteur), puis en consultant le fichier 7 indiquant la situation ou l'état courant(e) de l'utilisateur en fonction des dernières indications programmées par ce dernier.

Il convient de noter que l'utilisateur peut, bien entendu, définir de nouvelles situations ou de nouveaux états.

Ensuite, le module de sélection 2 consulte le fichier 5 d'affectation de degrés de priorité d'importance ou de préférence à des émetteurs donnés, correspondant à la situation ou à l'état courant(e) de l'utilisateur.

Ce fichier 5 détermine pour quels émetteurs il y a lieu de tenir compte du nombre d'appels ou de messages restés sans réponse, avec une adaptation correspondante des moyens et du mode de signalisation d'un nouvel appel ou d'un nouveau message à l'utilisateur.

Cette adaptation peut consister en une sélection de moyens de signalisation et de modes de mise en oeuvre présentant une efficacité d'avertissement croissante en fonction du nombre croissant d'appels ou de messages restés sans réponse.

Cette distinction entre les deux types d'émetteurs précités peut, par exemple, être définie par un indicateur booléen dénommé To_increment.

En fonction de l'état de cet indicateur (VRAI ou FAUX), une variable Nb_limit, indiquant le seuil de passage d'un degré ou niveau d'avertissement au degré d'avertissement suivant, sera affectée à l'émetteur concerné (To_increment = VRAI), ou alors un champ default_Ev indiquant directement et de manière prédéfinie (statique) le degré d'avertissement attribué de manière fixe à l'émetteur concerné, ce quel que soit le nombre d'appels ou de messages sans réponse (To_increment = FAUX).

Une structure possible du fichier 5 est représentée sous forme de tableau ci-après :

| Emetteur | To_increment | Nb_limit ou Ev |
|---|---|---|
| 04.66.77.84.xx | VRAI | 5 |
| 01.69.63.24.xx | VRAI | 10 |
| 01.46.65.76.xx | FAUX | 0 |
| titi@xxx.fr | FAUX | 1 |

Sur la base de ces informations, le module de sélection 2 est apte à calculer le degré d'avertissement (Ev) pour l'appel ou le message en instance. Ce calcul peut, par exemple, être effectué sur la base de la suite d'opérations algorythmiques suivantes :
- si To_increment = VRAI, alors Ev = E(N_call/Nb_limit)
- sinon Ev = default_Ev.
Après le calcul de Ev, le module de sélection 2 consulte le fichier 6 d'indication et de configuration du ou des moyens de signalisation, correspondant à la situation actuelle de l'utilisateur, en vue de déterminer le moyen de signalisation 3 à utiliser et les caractéristiques de configuration associées (volume, répétition, couleur, position ou analogue).

Après consultation de ce fichier, le module de sélection 2 sait exactement comment avertir l'utilisateur.

Toutefois, avant d'activer le moyen de signalisation 3 sélectionné, ledit module 2 peut consulter un fichier 8 contenant des valeurs de paramètres liés à l'environnement et, en fonction des informations lues, ledit module 2 peut modifier les caractéristiques de mise en oeuvre du ou des moyens de signalisation sélectionnés.

En conséquence, l'utilisateur est averti avec le moyen de signalisation et selon le mode d'avertissement les mieux appropriés aux circonstances courantes définies par les différents paramètres précités.

Grâce à l'invention, il est donc possible d'améliorer le confort d'utilisation d'un terminal récepteur, en permettant de réduire les inconvénients liés à des modes d'avertissement trop dérangeants, notamment en fonction de la situation de l'utilisateur, mais en évitant simultanément de négliger un mode d'avertissement efficient dans le cas d'un appel ou d'un message pouvant se révéler important ou urgent (par exemple appel ou message répétés fréquemment).

En outre, l'invention permet d'automatiser le filtrage d'appel, en limitant l'intervention de l'utilisateur. Ce filtrage peut, en outre, être adapté de manière souple à différentes circonstances et situations en prenant en compte un nombre plus ou moins élevé de paramètres liés à l'émetteur ou programmés par l'utilisateur.

Par ailleurs, il convient de noter que le procédé et le dispositif de signalisation selon l'invention pourront être mis en oeuvre dans différents appareils faisant partie d'un réseau de communication.
Ainsi, l'invention concerne également, d'une part, un terminal mobile de radiocommunication adapté pour une connexion avec un réseau de communication et, d'autre part, un autocommutateur ou un appareil de mise en communication analogue, caractérisés en ce qu'ils comportent un dispositif de signalisation et en ce qu'ils mettent en oeuvre un procédé de signalisation, tels que décrits ci-dessus.

Enfin, l'invention porte aussi sur un réseau de communication comprenant notamment au moins un contrôleur de réseau et une pluralité de stations de base, caractérisé en ce que ledit contrôleur de réseau comporte un dispositif et en ce qu'il met en oeuvre un procédé tels que décrits précédemment.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Procédé de signalisation d'un appel ou d'un message électronique entrant provenant d'un émetteur donné, à l'utilisateur d'un terminal récepteur, destinataire dudit appel ou message, ledit terminal récepteur réalise les étapes suivantes :
- identification de l'émetteur,
- prise en compte d'au moins un paramètre évolutif ou prédéterminé relatif audit émetteur ;
- sélection dynamique d'au moins un mode et/ou d'au moins un moyen de signalisation disponible au niveau dudit terminal récepteur en fonction de l'état dudit au moins un paramètre lié à l'émetteur, **caracterisé en ce que** ladit sélection dynamique est aussi realisée en fonction de l'état d'au moins un autre paramètre programmé par l'utilisateur et/ou de l'état d'au moins un paramètre lié à l'environnement ou à l'état dudit terminal récepteur ;
et **en ce que** le paramètre évolutif, relatif à l'émetteur, pris en compte à chaque nouvel appel ou message correspond au nombre d'appels ou de messages antérieurs de la part du même émetteur restés sans réponse, immédiate ou différée, de la part de l'utilisateur destinataire, ledit paramètre étant modifié, par exemple incrémenté, en cas d'absence de réponse audit nouvel appel ou message, le cas échéant sous réserve d'une autorisation correspondante de l'utilisateur.

2. Procédé selon la revendication 1, **caractérisé en ce qu'**un paramètre évolutif, relatif à l'émetteur, pris en compte correspond, dans le cas d'un message électronique, au degré d'importance attaché audit message.

3. Procédé selon l'une quelconque des revendications 1 à 2, **caractérisé en ce que** le paramètre prédéterminé, relatif à l'émetteur, pris en compte correspond à l'identité dudit émetteur.

4. Procédé selon l'une quelconque des revendications 1 à 3 , **caractérisé en ce que** le ou les paramètres programmés par l'utilisateur du terminal récepteur est (sont) choisi(s) dans le groupe formé par un degré de priorité ou d'importance spécifique attaché à différents émetteurs prédéfinis, la situation ou l'état courant(e) de l'utilisateur, et les préférences de l'utilisateur en termes de mode(s) et/ou de moyen(s) de signalisation et d'avertissement disponible(s).

5. Procédé selon l'une quelconque des revendications 1 à 4 , **caractérisé en ce que** le ou les paramètre(s) lié(s) à l'environnement ou à l'état dudit terminal récepteur est (sont) choisi(s) dans le groupe formé par le niveau de bruit environnant, le degré de luminosité environnante, le degré d'autonomie restant pour le terminal récepteur et la disponibilité fonctionnelle des différents moyens de signalisation possibles, la valeur de ce(s) dernier(s) paramètre(s) étant susceptible de modifier le mode de mise en oeuvre du ou des moyen(s) de signalisation sélectionné(s).

6. Procédé selon l'une quelconque des revendications 1 à 5 , **caractérisé en ce qu'**il consiste, à l'occasion de chaque nouvelle réception d'un appel ou message entrant, à déterminer au moins un mode et/ou au moins un moyen de signalisation ou une combinaison de plusieurs modes et/ou moyens de signalisation, ainsi qu'éventuellement les degrés d'intensités respectifs de leur mise en oeuvre, par sélection sur la base d'une ou de plusieurs échelles de gradation, par exemple en termes d'efficacité d'avertissement, desdits modes et/ou moyens, chacune desdites échelles étant associées à une situation et/ou à un état courant(e) de l'utilisateur programmé(e) par ce dernier, et en fonction d'une valeur ou d'un niveau d'avertissement calculé à partir des valeurs des paramètres évolutif(s) et/ou non évolutif(s) attaché à l'émetteur.

7. Procédé selon l'une quelconque des revendications 1 à 5 **caractérisé en ce qu'**il consiste, à l'occasion de chaque nouvel appel ou message entrant, à sélectionner un mode et/ou un moyen de signalisation après, d'une part, analyse des différents types de paramètres impliqués, d'outre part, prise en compte de leur importance relative prédéfinie par l'utilisateur et, enfin, vérification de l'existence de configurations de sélection multiparométriques préprogrammées par l'utilisateur et s'appliquant audit appel ou message entrant.

8. Terminal de télécommunication, adopté pour une connexion avec un réseau de communication, comportant un dispositif pour la signalisation d'un appel ou d'un message électronique entrant provenant d'un appelant au moyen d'un terminal émetteur donné, à l'utilisateur dudit terminal de télécommunication, destinataire dudit appel ou message, comprenant un moyen (1) d'identification du numéro ou de l'adresse de l'émetteur, **caracterisé en ce que** ledit terminal comprend un module (2) de sélection dynamique d'au moins un mode et/ou moyen de signalisation (3) disponible au niveau dudit terminal de télécommunication en fonction de l'état d'au moins un paramètre, évolutif ou prédéterminé, relatif à l'émetteur et pris en compte par ledit module (2), en relation avec l'état d'au moins un paramètre programmé par l'utilisateur et/ou l'état d'au moins un paramètre lié(s) à l'environnement ou à l'état dudit terminal de télécommunication , et **en ce que** le paramètre évolutif, relatif à l'émetteur, pris en compte à chaque nouvel appel ou message correspond ou nombre d'appels ou de messages antérieurs de la part du même émetteur restés sans réponse, immédiate ou différée, de la part de l'utilisateur destinataire, ledit paramètre étant modifié, par exemple incrémenté, en cas d'absence de réponse audit nouvel appel ou message, le cas échéant sous réserve d'une autorisation correspondante de l'utilisateur.

9. Terminal de télécommunication selon la revendication 8, **caractérisé en ce qu'**il comprend un fichier historique (4) stockant automatiquement, pour chaque appel de message, le numéro ou l'adresse de l'émetteur, ainsi que, soit le nombre d'appels ou de messages successifs émis par chacun desdits émetteurs et restés sons réponse de la part de l'utilisateur du terminal de télécommunication, soit une simple indication d'attente de réponse de la part desdits émetteurs, ledit fichier historique (4) étant mis à jour automatiquement à chaque nouvel appel ou message, par incrémentation de la variable indiquant le nombre d'appels ou de messages antérieurs de l'émetteur considéré restés sans réponse, par activation d'un indicateur d'attente de réponse de la part de l'émetteur considéré, ou encore par création d'un nouvel emplacement dons ledit fichier historique (4) pour le stockage du numéro ou de l'adresse de l'émetteur et de la variable ou de l'indicateur correspondant.

10. Terminal selon la revendication 9, **caractérisé en ce que** le module de sélection dynamique (2) est apte, après prise en compte du numéro ou de l'adresse de l'émetteur, à lire la valeur de la variable ou l'état de l'indicateur affecté(e) audit émetteur, ces informations constituant un premier paramètre évolutif relatif à ce dernier.

11. Terminal de télécommunication selon l'une quelconque des revendications 8 à 10, **caractérisé en ce qu'**il comprend également un fichier (5) d'affectation de degrés de priorité ou d'importance spécifique à des émetteurs donnés, un fichier (6) d'indication et de configuration du ou des moyens de signalisation en fonction des valeurs et/ou état(s) des paramètres pris en compte par le module de sélection dynamique (2), un fichier ou une variable (7) programmable indiquant la situation ou l'état courant(e) de l'utilisateur et un fichier (8) contenant des valeurs de paramètres liés à l'environnement ou à l'état dudit terminal mobile, ces fichiers et/ou cette variable étant, ensemble avec le fichier historique (4), consulté(e)(s) et leurs contenus exploités par le module de sélection dynamique (2) en vue de la commande contrôlée du ou des moyens de signalisation (3) pour générer un signal ou un message d'avertissement adapté pour l'utilisateur.

## Patentansprüche

1. Verfahren zur Signalisierung eines von einem bestimmten Sender eingehenden Anrufes oder eingehenden elektronischen Nachricht an den Nutzer eines Empfängerterminals, das Ziel des Anrufs oder der Nachricht ist, wobei dieses Terminal die folgenden Schritte durchläuft:
- ldentifizierung des Senders;
- Berücksichtigung von mindestens einem auf diesen Sender bezüglichen sich verändernden oder festgelegten Parameter;
- dynamische Selektion mindestens eines Signalisierungsmodus und/oder mindestens eines Signalisierungsmittels, der/das auf der Ebene dieses Empfängerterminals verfügbar ist in Abhängigkeit vom Status desselben mindestens ein sendergebundener Parameter, **dadurch gekennzeichnet, dass** diese dynamische Selektion auch erfolgt in Abhängigkeit vom Status mindestens eines weiteren vom Nutzer programmierten Parameters und/oder vom Status mindestens eines an die Umgebung gebundenen Parameters oder vom Status dieses Empfängerterminals;
und **dadurch**, dass dieser sich verändernde senderbezügliche Parameter; der bei jedem neuen Anruf oder jeder neuen Nachricht berücksichtigt wird, der Anzahl der vorhergehenden Anrufe oder Nachrichten seitens des gleichen Senders entspricht, die vom Nutzer, der Empfänger ist, weder unverzüglich noch später beantwortet wurden, wobei dieser Parameter im Fall einer nicht erfolgenden Antwort auf diesen neuen Anruf oder diese neue Nachricht abgeändert, beispielsweise inkrementiert wird, gegebenenfalls vorbehaltlich einer entsprechenden Genehmigung durch den Nutzer.

2. Verfahren gemäß Anspruch 1, **dadurch gekennzeichnet, dass** ein erster sich verändernder senderbezüglicher Parameter, der berücksichtigt wird, im Falle einer elektronischen Nachricht, dem Bedeutungsgrad entspricht, der dieser Nachricht beigemessen wird.

3. Verfahren gemäß Anspruch 1 oder 2, **dadurch gekennzeichnet, dass** der festgelegte senderbezügliche Parameter, der berücksichtigt wird, der Identität des Senders entspricht.

4. Verfahren gemäß einem der Ansprüche 1 bis 3, **dadurch gekennzeichnet, dass** der oder die vom Nutzer des Empfängerterminals programmierte(n) Parameter aus der Gruppe ausgewählt wird (werden), die gebildet wird vom spezifischen Prioritäts- oder Bedeutungsgrad, der verschiedenen vorgegebenen Sendern beigemessen wird, der aktuellen Situation oder dem aktuellen Status des Nutzers und den Präferenzen des Nutzers im Hinblick auf Modus (Modi) und/oder verfügbare(s) Mittel zur Signalisierung und Meldung.

5. Verfahren gemäß einem der Ansprüche 1 bis 4, **dadurch gekennzeichnet, dass** der oder die Parameter, der (die) an die Umgebung oder den Status dieses Empfängerterminals gebunden sind, ausgewählt wird (werden) aus der Gruppe, welche gebildet wird aus dem umgebenden Geräuschpegel, dem umgebenden Helligkeitsgrad, dem für den Empfängerterminal verbleibenden Autonomiegrad und der funktionellen Verfügbarkeit der verschiedenen möglichen Signalisierungsmittel, wobei der Wert dieses(r) letzten Parameter(s) den Einsatzmodus des oder der ausgewählten Signalisierungsmittel ändern kann.

6. Verfahren gemäß einem der Ansprüche 1 bis 5, **dadurch gekennzeichnet, dass** es darin besteht, anlässtich jedweden neuen Empfangs eines eingehenden Anrufs oder einer eingehenden Nachricht, mindestens einen Signalisierungsmodus und/oder mindestens ein Signalisierungsmittel oder eine Kombination aus mehreren Modi und/oder Signalisierungsmitteln zu bestimmen, sowie eventuell die jeweiligen Intensitätsgrade ihres Einsatzes, durch Selektion auf der Grundlage einer oder mehrerer Einstufungsmaßstäbe, beispielsweise hinsichtlich der Effektivität der Meldung dieser Modi und/oder Mittel, wobei jeder dieser Maßstäbe verbunden ist mit einer aktuellen Situation und/oder einem aktuellen Status des Nutzers, welche/r von diesem programmiert wurde, und in Abhängigkeit von einem Wert oder einem Meldungsniveau, das ausgehend von den Werten der sich verändernden und/oder sich nicht verändernden Parameter, die mit dem Sender verbunden sind, berechnet wird.

7. Verfahren gemäß einem der Ansprüche 1 bis 5, **dadurch gekennzeichnet, dass** es darin besteht, bei jedem neuen eingehenden Anruf oder Nachricht, einen Modus und/oder ein Signalisierungsmittel auszuwählen, nach zum einen Analyse der verschiedenen implizierten Parametertypen und zum anderen Berücksichtigung ihrer vom Nutzer vorgegebenen relativen Bedeutung und schließlich Überprüfung des Vorhandenseins von Multiparameter-Selektionskonfigurationen, die vom Nutzer vorprogrammiert sind und auf diesen eingehenden Anruf oder diese eingehende Nachricht Anwendung finden.

8. Für eine Verbindung mit einem Kommunikationsnetz geeignetes Telekommunikationsterminal, das ein Gerät für die Signalisierung eines eingehenden Anrufs oder einer eingehenden elektronischen Nachricht von einem Anrufer mittels eines bestimmten Senderterminals an den Nutzer dieses Telekommunikationsterminals, welches Ziel dieses Anrufs oder dieser Nachricht ist, beinhaltet, und ein Mittel (1) zur Identifizierung der Nummer oder der Adresse des Senders enthält, **dadurch gekennzeichnet, dass** dieses Terminal ein Modul (2) zur dynamischen Selektion von mindestens einem Modus und/oder Mittel zur Signalisierung (3) beinhaltet, der/das auf der Ebene dieses Telekommunikationsterminals verfügbar ist, in Abhängigkeit vom Status mindestens eines senderbezogenen sich verändernden oder festgelegten Parameters und von diesem Modul (2) berücksichtigt wird, in Verbindung mit dem Status von mindestens einem vom Nutzer programmierten Parameter und/oder dem Status von mindestens einem an die Umgebung oder an den Status dieses Telekammunikationsterminals gebundenen Parameters, **dadurch gekennzeichnet, dass** der sich verändernde senderbezogene Parameter, der bei jedem neuen Anruf oder jeder Nachricht berücksichtigt wird, der Anzahl der vorhergehenden Anrufe oder Nachrichten seitens des gleichen Senders entspricht, die vom Nutzer, welcher Empfänger ist weder direkt noch später beantwortet wurden, wobei dieser Parameter verändert wird, beispielsweise inkrementiert, wenn auf den neuen Anruf oder die neue Nachricht nicht geantwortet wird, gegebenenfalls vorbehaltlich einer entsprechenden Genehmigung durch den Nutzer.

9. Telekommunikationsterminal gemäß Anspruch 8, **dadurch gekennzeichnet, dass** es eine Protokolldatei (4) enthält, die automatisch für jeden Anruf/jede Nachricht die Nummer oder Adresse des Senders speichert sowie entweder die Anzahl der aufeinander folgenden Anrufe oder Nachrichten der jeweiligen Sender, die seitens des Nutzers des Telekommunikationsterminals unbeantwortet blieben, oder eine einfache Anzeige "Warten auf Antwort" seitens dieser Sender, wobei diese Protokolldatei (4) bei jedem neuen Anruf oder jeder neuen Nachricht durch Inkrementierung der Variablen, welche die Anzahl der vorhergehenden als unbeantwortet geltenden Anrufe oder Nachrichten des betreffenden Senders angibt, durch Aktivierung eines Indikators "Warten auf Antwort" seitens des betreffenden Senders, oder durch Einrichtung einer neuen Speicherstelle in dieser Protokolldatei (4) für die Speicherung der Nummer oder der Adresse des Senders und der Variablen oder des entsprechenden Indikators, automatisch aktualisiert wird.

10. Terminal gemäß Anspruch 9, **dadurch gekennzeichnet, dass** das dynamische Selektionsmodul (2) imstande ist, nach Berücksichtigung der Nummer oder der Adresse des Senders den Wert der Variablen oder den Status des diesem Sender zugewiesenen Indikators abzulesen, wobei diese Informationen einen ersten sich verändernden Parameter bezüglich dieses Senders darstellen.

11. Telekommunikationsterminal gemäß einem der Ansprüche 8 bis 10, **dadurch gekennzeichnet, dass** es ebenfalls eine Datei (5) für die Zuweisung von senderspezifischen Prioritäts- oder Bedeutungsgraden beinhaltet, eine Datei (6) für die Anzeige und Konfiguration des oder der Signalisierungsmittel in Abhängigkeit von den Werten und/oder Status der Parameter, die vom dynamischen Selektionsmodul (2) berücksichtigt werden, eine Datei oder eine programmierbare Variable (7), welche die aktuelle Situation oder den aktuellen Status des Nutzers angibt und eine Datei (8), die Werte von Parametern enthält, die an die Umgebung oder den Status dieses mobilen Terminals gebunden sind, wobei diese Dateien und/oder diese Variable zusammen mit der Protokolldatei (4) abgefragt werden und ihr Inhalt vom dynamischen Selektionsmodul (2) im Hinblick auf die kontrollierte Steuerung des oder der Signalisierungsmittel (3) zur Erzeugung eines an den Nutzer angepassten Meldungssignals oder einer Meldungsnachricht ausgewertet wird.

## Claims

1. Method of signaling an incoming call or electronic message originating from a given sender, to the user of a receiving terminal, the recipient of said call or message, said receiving terminal carries out the following steps:
- identification of the sender,
- recognition of at least one modifiable or predetermined parameter relating to said sender;
- dynamic selection of at least one mode and/or of at least one means of signaling available in said receiving terminal as a function of the state of said at least one parameter associated with the sender, **characterized in that** said dynamic selection is also carried out as a function of the state of at least one other parameter programmed by the user and/or the state of at least one parameter associated with the environment or with the state of said receiving terminal;
and **in that** the modifiable parameter, relating to the sender, recognized on each new call or message corresponds to the number of prior calls or messages from the same sender remaining without an immediate or deferred answer from the receiving user, said parameter being modified, for example incremented, in the case of no answer to said new call or message, where appropriate conditional upon a corresponding authorization of the user.

2. Method according to claim 1, **characterized in that** a recognized modifiable parameter, relating to the sender, corresponds, in the case of an electronic message, to the degree of importance attached to said message.

3. Method according to either one of claims 1 to 2, **characterized in that** the recognized predetermined parameter, relating to the sender, corresponds to the identity of said sender.

4. Method according to any one of claims 1 to 3, **characterized in that** the parameter(s) programmed by the user of the receiving terminal is (are) chosen from the group formed by a specific degree of priority or importance attached to different predefined senders, the current situation or state of the user, and the preferences of the user in terms of mode(s) and/or means of signaling and notification available.

5. Method according to any one of claims 1 to 4, **characterized in that** the parameter(s) associated with the environment or with the state of said receiving terminal is (are) chosen from the group formed by the level of environmental noise, the degree of environmental light, the degree of battery life remaining for the receiving terminal and the functional availability of the various possible signaling means, the value of the latter parameter(s) being capable of modifying the mode of applying the selected signaling means.

6. Method according to any one of claims 1 to 5, **characterized in that** it consists, on the occasion of each new reception of an incoming call or message, in determining at least one mode and/or at least one means of signaling or a combination of several modes and/or means of signaling, and where appropriate the respective degrees of intensities of their application, by selection on the basis of one or more gradation scales, for example in terms of effectiveness of notification, of said modes and/or means, each of said scales being associated with a current situation and/or state of the user programmed by the latter, and as a function of a value or a level of notification computed from the values of the modifiable and/or non-modifiable parameter(s) attached to the sender.

7. Method according to any one of claims 1 to 5, **characterized in that** it consists, on the occasion of each new incoming call or message, in selecting a mode and/or a means of signaling after, on the one hand, analysis of the various types of parameters involved, on the other hand, recognition of their relative importance predefined by the user and, finally, verification of the existence of multiparametric selection configurations preprogrammed by the user and applying to said incoming call or message.

8. Telecommunication terminal, adapted for a connection with a communication network, comprising a device for the signaling of an incoming call or electronic message originating from a caller by means of a given sending terminal, to the user of said telecommunication terminal, the recipient of said call or message, comprising a means (1) of identifying the number or the address of the sender, **characterized in that** said terminal comprises a module (2) for dynamic selection of at least one mode and/or signaling means (3) available in said telecommunication terminal as a function of the state of at least one modifiable or predetermined parameter relating to the sender and recognized by said module (2), in relation with the state of at least one parameter programmed by the user and/or the state of at least one parameter associated with the environment or with the state of said telecommunication terminal, and **in that** the modifiable parameter, relating to the sender, recognized on each new call or message corresponds to the number of prior calls or messages from the same sender remaining without immediate or deferred answer from the receiving user, said parameter being modified, for example incremented, in the case of no answer to said new call or message, where appropriate conditional upon a corresponding authorization of the user.

9. Telecommunication terminal according to claim 8, **characterized in that** it comprises a history file (4) automatically storing, for each call or message, the number or the address of the sender, and, either the number of successive calls or messages sent by each of said senders and remaining unanswered by the user of the telecommunication terminal, or a simple indication of answer awaited by said senders, said history file (4) being automatically updated on each new call or message, by incrementation of the variable indicating the number of prior calls or messages from the sender considered remaining unanswered, by activation of an indicator that an answer is awaited by the sender in question, or else by creation of a new position in said history file (4) for the storage of the number or the address of the sender and of the variable or the corresponding indicator.

10. Terminal according to claim 9, **characterized in that** the dynamic selection module (2) is capable, after recognition of the number or the address of the sender, of reading the value of the variable or the state of the indicator assigned to said sender, this information constituting a first modifiable parameter relating to the latter.

11. Telecommunication terminal according to any one of claims 8 to 10, **characterized in that** it also comprises a file (5) for the assignment of degrees of priority or of importance specific to given senders, a file (6) for indication and configuration of the signaling means as a function of the values and/or state(s) of the parameters recognized by the dynamic selection module (2), a file or a programmable variable (7) indicating the current situation or state of the user and a file (8) containing values of parameters associated with the environment or the state of said mobile terminal, these files and/or this variable being, together with the history file (4), consulted and their contents exploited by the dynamic selection module (2) with a view to the controlled command of the signaling means (3) for generating an appropriate signal or notification message for the user.
